# EUROPÄISCHE PATENTSCHRIFT

(11) **EP 1 600 808 B1**
(45) Veröffentlichungstag und Bekanntmachung des Hinweises auf die Patenterteilung: **17.01.2007**
(21) Anmeldenummer: 05010156.7
(22) Anmeldetag: 10.05.2005
(51) Int. Cl.: G02F 1/13357, H01J 61/30

(54) **Beleuchtungssystem mit einem Gehäuse und einer darin angeordneten Flachlampe**
Illumination system with a flat lamp in a case
Système d'illumination avec une lampe plate dans une boîte

(30) Priorität: 19.05.2004 DE 102004025266
(43) Veröffentlichungstag der Anmeldung: 30.11.2005
(73) Patentinhaber: Patent-Treuhand-Gesellschaft für elektrische Glühlampen mbH, 81543 München (DE)
(72) Erfinder: Hitzschke, Lothar, Dr., 81737 München (DE); Vollkomer, Frank, Dr., 82131 Buchendorf (DE)

(56) Entgegenhaltungen:
- WO-A-03/017312
- US-A- 5 994 849
- US-A- 6 034 470
- US-A1- 2002 063 514
- US-A1- 2002 154 258
- US-A1- 2004 046 490

## Beschreibung

### Technisches Gebiet

Die Erfindung geht aus von einem Beleuchtungssystem mit einem Gehäuse und einer darin angeordneten Flachlampe. Derartige Beleuchtungssysteme werden als sogenannte Lichtkästen für vielfältige Beleuchtungsaufgaben eingesetzt, insbesondere auch für die Hinterleuchtung von Flüssigkristallbildschirmen (LCD) - dort auch Backlight Units genannt -, sowie als Leuchte in der Allgemeinbeleuchtung. Für Hinterleuchtungsaufgaben sind insbesondere großformatige LCD-Fernsehgeräte zu nennen, die in jüngster Zeit zunehmende Aufmerksamkeit gewinnen.

Unter der Bezeichnung "Flachlampe" sind hier Lampen, insbesondere Leuchtstofflampen, mit einer flächigen Geometrie gemeint, die weißes oder farbiges Licht sowie für Spezialanwendungen auch UV-Licht emittieren.

Neben konventionellen Flachlampen mit Quecksilber und/oder Edelgasfüllung zielt die Erfindung insbesondere auf Flachlampen vom Typ der dielektrischen Barriere-Entladungslampe mit streifen- bzw. linienartigen Elektroden, die typischerweise auf einer oder auf zwei gegenüberliegenden Wänden des flachen Entladungsgefäßes angeordnet sind. Außerdem sind entweder die Elektroden einer Polarität oder aber alle Elektroden, d.h. beiderlei Polarität, mittels einer dielektrischen Schicht von der Entladung getrennt (einseitig bzw. zweiseitig dielektrisch behinderte Entladung). Derartige Elektroden werden im folgenden auch verkürzend als "dielektrische Elektroden" bezeichnet.

Ferner ist noch klarzustellen, dass die dielektrische Schicht keine speziell zu diesem Zweck auf eine Elektrode aufgebrachte Schicht sein muss, sondern beispielsweise auch durch eine Entladungsgefäßwand gebildet sein kann, wenn nämlich Elektroden auf der Außenseite einer Entladungsgefäßwand oder innerhalb der Wand angeordnet sind.

Flachlampen vom Typ der dielektrischen Barriere-Entladungslampe haben sich als besonders effiziente flache Lichtquellen erwiesen, wenn sie mit dem in der US 5 604 410 beschriebenen gepulsten Betriebsverfahren betrieben werden und eignen sich deshalb besonders gut für die Verwendung in einem Lichtkasten bzw. einer Backlight Unit.

### Stand der Technik

In der US 6 034 470 B1 ist eine Flachlampe mit auf der Innenseite einer Entladungsgefäßwand angeordneten Elektrodenbahnen offenbart, die zum Zwecke der Hinterleuchtung eines LCD-Monitors in ein gemeinsames Gehäuse eingebaut ist (siehe Figur 7). Hinsichtlich der Befestigung der Flachlampe innerhalb des Gehäuses finden sich allerdings keine Details. Aus der Figur 7 ist lediglich ersichtlich, dass die Flachlampe in einem gewissen Abstand von der Rückwand des Gehäuses zwischen dessen Seitenwänden gleichsam "eingespannt" ist. Eine generelle Problematik bei der Hinterleuchtung von LCDs besteht darin, dass Flachlampen im Betrieb unerwünschte Abwärme erzeugen, die LCDs aber relativ empfindlich gegenüber hohen Temperaturen sind, was ein entsprechend wirkungsvolles thermisches Management erforderlich macht. Zu diesem Zweck schlägt die US 6 034 470 B1 vor, auf der Außenseite der Rückwand des Gehäuses einen Kühlkörper anzubringen. Hinsichtlich des Wärmetransports von der Flachlampe zur Gehäuserückwand finden sich allerdings keine Details.

Das Dokument US 20021063514 A1 offenbart ein Beleuchtungssystem zur Hinterleuchtung von Flüssigkristallbildschirmen, das alle Merkmale der Präambel von Anspruch 1 aufweist. Dazu ist eine Flachlampe in einem flachen Gehäuse mit einer planen Rückwand sowie vier Seitenwänden angeordnet. Mit Hilfe eines auf die Seitenwände des Gehäuses aufsteckbaren umlaufenden Rahmens, der im Querschnitt rechtwinklig ist und sich über den Rand der Flachlampe erstreckt, ist die Flachlampe zwischen Rückwand des Gehäuses und Rahmen fixiert.

### Darstellung der Erfindung

Die Aufgabe der vorliegenden Erfindung ist es, ein hinsichtlich der thermischen Eigenschaften verbessertes Beleuchtungssystem mit einem Gehäuse und einer darin angeordneten Flachlampe bereitzustellen. Ein weiterer Aspekt ist, dass ein möglichst einfacher und damit kostengünstiger Aufbau angestrebt wird, der eine zuverlässige und bruchsichere Befestigung der Flachlampe innerhalb des Gehäuses gewährleistet.

Diese Aufgabe wird gelöst durch ein Beleuchtungssystem, insbesondere zur Hinterleuchtung von Flüssigkristallbildschirmen, mit einer Flachlampe, die eine für die Lichtabstrahlung vorgesehene Vorderseite und eine dazu entgegengesetzte Rückseite aufweist, einem flachen Gehäuse mit einer planen Rückwand sowie vier Seitenwänden, wobei die Flachlampe innerhalb des Gehäuses auf der Rückwand angeordnet ist, einem Rahmen, der einerseits die Seitenwände des Gehäuses zumindest teilweise umfasst und sich andererseits mindestens bis zum Rand der Flachlampe erstreckt, gekennzeichnet durch eine um die Flachlampe umlaufende elastische Leiste, die sich zwischen dem Rahmen und dem Rand der Flachlampe erstreckt.

Besonders vorteilhafte Ausgestaltungen finden sich in den abhängigen Ansprüchen.

Um eine möglichst gute Abfuhr der im Betrieb von der Flachlampe erzeugten Wärme zu erzielen, hat es sich als vorteilhaft erwiesen, die Flachlampe direkt auf der Innenseite der wärmeleitfähigen, z.B. metallischen Rückwand des Gehäuses zu befestigen oder zwischen der Rückseite der Flachlampe und der Rückwand des Gehäuses lediglich eine dünne elastische Auflage anzuordnen. Hierfür werden vorzugsweise doppelseitige Klebestreifen benutzt, da damit bereits eine Fixierung der Flachlampe im Gehäuse bezüglich der beiden Schwingungsrichtungen, d.h. sowohl in Richtung hin zur Rückwand als auch davon weg erfolgt. Vorteilhaft ist in diesem Zusammenhang auch eine möglichst flächige Abstützung der Lampe, wobei die dünne elastische Auflage allerdings nicht notwendigerweise einteilig sein muss, sondern beispielsweise auch mittels mehrerer Streifen oder sonst irgendwie geformter Teilstücke realisiert sein kann. Entscheidend ist, ein Durchhängen bzw. beidseitiges Durchschwingen der Flachlampe, z.B. beim Transport, und die damit verbundenen Spannungskräfte, die im ungünstigsten Fall zum Bruch der Flachlampe führen können, zu vermeiden. Etwaige auf die Flachlampe wirkende Beschleunigungskräfte werden so nämlich auf größere Flächen verteilt und stark gedämpft. Vorzugsweise sind mehrere doppelseitige Klebestreifen parallel zu einer oder zu den beiden Seitenkanten der Rückseite der Flachlampe gleichverteilt angeordnet, so dass die Klebestreifen den Raum zwischen der Rückseite der Flachlampe und der Rückwand des Gehäuses in mehrere gedachte gleichgroße flache Kammern aufteilen. Ziel dieser Maßnahme ist es, - insbesondere wenn die Flachlampe beim Betrieb eine vertikale Position hat - eine Konvektion im Raum zwischen der Rückseite der Flachlampe und der Rückwand des Gehäuses zu unterdrücken, um ein möglichst homogenes Temperaturprofil entlang der Rückseite der Flachlampe zu gewährleisten. Dies kann durch geeignet kleine Kammern, d.h. letztlich durch eine ausreichende Anzahl gleichverteilter doppelseitiger Klebestreifen erreicht werden.

Um die Wärmeabfuhr weiter zu verbessern kann es vorteilhaft sein, die Außenseite der Rückwand des Gehäuses zu schwärzen, um dadurch den Emissionskoeffizienten zu erhöhen.

Außerdem ist zwischen dem Rahmen und dem Rand der Flachlampe eine elastische Leiste, z.B. aus Moosgummi vorgesehen, die die Flachlampe beispielsweise mittels Formschluss festhält und gleichzeitig mögliche Spannungskräfte ausgleicht und damit die Bruchgefahr für die Flachlampe verringert.

Optional ist der Rahmen so ausgebildet, dass er den Rand der Flachlampe etwas überdeckt. Dadurch kann auch ein Eindringen von Staub, Feuchtigkeit etc. in das Gehäuse vermieden werden.

Außerdem ist der Rahmen vorzugsweise so geformt, dass er eine an den Rand der Vorderseite der Flachlampe angrenzende, umlaufende Fläche aufweist, die als Reflektor, insbesondere für sichtbares Licht, ausgelegt ist und zu der Vorderseite der Flachlampe hin geneigt ist.

Für den Fall, dass die verwendete Flachlampe mit auf ihrer Rückseite aufgebrachten linienartige Außenelektroden versehen ist, muss die Rückseite der Flachlampe einschließlich der linienartigen Außenelektroden mit einer elektrisch isolierenden Schutzschicht bedeckt sein, um einen elektrischen Kurzschluss zwischen Außenelektroden und Rückwand sicher zu vermeiden. Alternativ können die Außenelektroden in einem folienartigen Laminat integriert sein, welches bereits eine solche Schutzschicht umfasst. Für weitere Details sei auf das Ausführungsbeispiel verwiesen.

### Kurze Beschreibung der Zeichnungen

Im Folgenden soll die Erfindung anhand eines Ausführungsbeispiels näher erläutert werden. Die Figuren zeigen:
- Fig. 1a: eine Draufsicht auf das erfindungsgemäße Beleuchtungssystem mit einem Gehäuse und einer darin angeordneten Flachlampe,
- Fig. 1b: eine Querschnittdarstellung durch das Beleuchtungssystem aus Fig. 1a entlang der Linie AA,
- Fig. 1c: eine vergrößerte Ansicht der Einzelheit X der Querschnittdarstellung des Beleuchtungssystem aus Fig. 1b,
- Fig. 2: die Flachlampe aus dem in den Fig. 1a - 1c dargestellten Beleuchtungssystem,
- Fig. 3: das auf die Rückseite der Flachlampe aus Fig. 2 aufgeklebte Elektroden-Schutzfolien-Laminat.

### Bevorzugte Ausführung der Erfindung

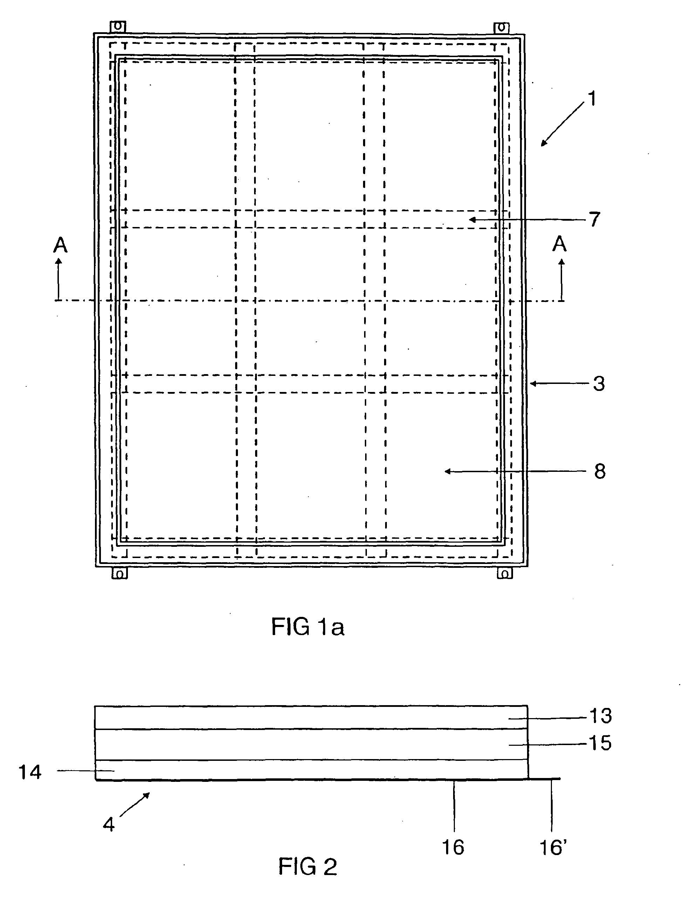

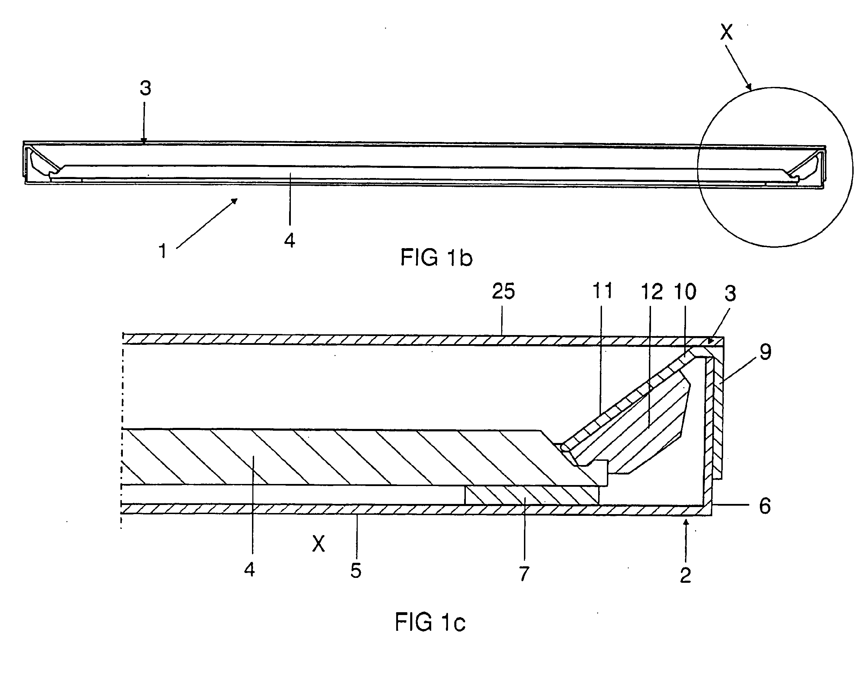

Im Folgenden wird Bezug auf die Figuren 1a - 1c genommen, die schematisch eine Draufsicht, eine Querschnittdarstellung entlang der Linie AA und eine vergrößerte Ansicht der Einzelheit X eines erfindungsgemäßen Beleuchtungssystems 1 zeigen, das für die Hinterleuchtung von Flüssigkristallbildschirmen (LCD) vorgesehen ist (Backlight Unit). Das Beleuchtungssystem 1 besteht im wesentlichen aus einem einseitig offenen Gehäuse 2 und einem Rahmen 3, beide aus Aluminium, sowie einer Flachlampe 4 vom Typ dielektrische Barriere-Entladungslampe. Das Gehäuse 2 besteht aus einer Rückwand 5, die von senkrechten Seitenwänden 6 eingefasst ist. Die Flachlampe 4 ist innerhalb des Gehäuses 2 auf dessen Rückwand 5 mit Hilfe von dünnen elastischen, doppelseitig klebenden Auflagestreifen 7 befestigt. Die Auflagestreifen 7 (z.B. "Double Coated Foam Tapes" der Firma 3M), Dicke ca. 1 bis 2 mm, verlaufen einerseits entlang des Randes der Rückseite der Flachlampe 4. Andererseits sind vier Auflagestreifen 7 gitterartig auf der Rückseite der Flachlampe 4 gleichverteilte angeordnet. Auf diese Weise sind insgesamt neun gedachte Abschnitte der Lampenrückseite durch die Auflagestreifen 7 eingefasst (siehe Fig. 1a), die zusammen mit der Rückwand 5 flache Kammern 8 bilden. Der in seiner Grundform rechteckige Rahmen 3 besteht aus vier Außenwänden 9 und damit jeweils winkelig verbundenen vier Innenwänden 10, deren Außenseiten als Reflektorflächen 11 ausgebildet sind. In der vergrößerten Schnittdarstellung der Figur 1c hat der Rahmen 3 ein winkelartiges Profil, das einem "V" ähnelt. Der Rahmen 3 ist auf das Gehäuse 2 so aufgesteckt, dass die Außenwände 9 des Rahmens 3 die Seitenwände 6 des Gehäuses 2 kraftschlüssig umfassen. Dadurch greifen die Innenwände 10 des Rahmens 3 schräg in das Innere des Gehäuses 2. Auf der Unterseite der Innenwände 10 des Rahmens 3 ist eine umlaufende Moosgummileiste 12 angebracht, die so geformt ist, dass sie den Rand der Flachlampe 4 formschlüssig umgreift. Auf die vorstehend erläuterte Weise ist die Flachlampe 4 zuverlässig und bruchsicher zwischen dem Rahmen 3 und der Rückwand 5 des Gehäuses 2 positioniert.

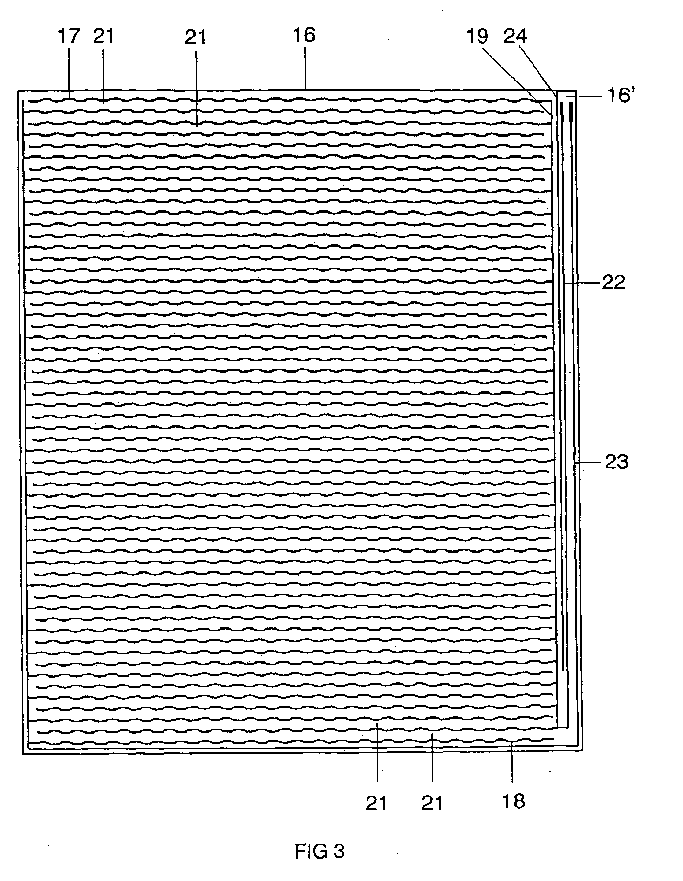

Für die weitere Erläuterung der Flachlampe 4, die in der schematischen Schnittdarstellung der Figur 1c nur sehr grob und ohne Details dargestellt ist, wird im Folgenden Bezug auf die in Figur 2 dargestellte Seitenansicht genommen.

Das Entladungsgefäß der Flachlampe 4, die eine Diagonale von 21,3" und ein Seitenverhältnis von 4:3 hat, ist durch eine Frontplatte 13, eine Bodenplatte 14 und einem dazwischen angeordneten Entladungsgefäßrahmen 15 gebildet, wobei der Entladungsgefäßrahmen 15 die beiden Platten 13, 14 gasdicht miteinander verbindet. Um eine möglichst gute Wärmeleitung von der Flachlampe weg und hin zur Rückwand des Gehäuses zu erreichen, ist es vorteilhaft, wenn die Bodenplatte 14 möglichst dünn ist.

Alternativ kann auch auf einen Rahmen verzichtet werden, wenn Boden- und Frontplatte nicht beide völlig plan sind, sondern zumindest im Randbereich derart geformt sind, dass der Rahmen in zumindest einer der beiden Platten gleichsam integriert ist, z.B. indem die Frontplatte wellenartig geformt ist (nicht dargestellt). Diese Variante hat überdies den Vorteil, dass die Bodenplatte ohne Probleme hinsichtlich der Stabilität des Entladungsgefäßes besonders dünn gemacht werden kann, was - wie vorstehend erwähnt - für eine gute Wärmeleitung in Richtung Rückwand des Gehäuses vorteilhaft ist. Für weitere Details hierzu wird auf die Schriften US-A 5 994 849 und WO 03/017312 verwiesen, deren diesbezüglicher Offenbarungsgehalt durch Inbezugnahme hiermit eingeschlossen ist.

Im Innern des Entladungsgefäßes der Flachlampe 4 befinden sich Xenon und Neon mit einem partiellen Fülldruck von ca. 10 kPa bzw. ca. 20 kPa. Auf der Außenseite der dünnen Bodenplatte 14 ist ein Laminat 16 aufgeklebt. Ein nicht aufgeklebter Fortsatz 16' des Laminats 16 dient als flexible Zuleitung (für Details siehe Fig. 3). Die äußerste Schicht des Laminats 16 bildet eine ca. 50 µm dicke Trägerfolie aus PET (Polyester), die gleichzeitig als Schutzfolie für darüber liegende ca. 15 µm dicke Elektrodenbahnen (für Details siehe Fig. 3) aus Kupfer dient. Darauf folgt schließlich eine ca. 80 µm dicke Acrylkleberschicht, mit der das Laminat 16 an die Außenseite der Bodenplatte 14 aufgeklebt ist.

Fig. 3 zeigt in Draufsicht die Kupferschichtseite des auf die Außenseite der Bodenplatte 14 der Flachlampe 4 aufgeklebten Laminats 16. Die Kupferschichtseite besteht im Detail aus 29 parallel nebeneinander und mit gegenseitigem Abstand zueinander angeordneten Elektrodenbahnen 17, die für eine erste Polarität vorgesehen sind sowie ebensolche 29 Elektrodenbahnen 18, die für eine zweite Polarität vorgesehen sind, wobei fortlaufend eine Elektrodenbahn 17 der ersten Polarität mit einer Elektrodenbahn 18 der zweiten Polarität abwechseln. Auf gegenüberliegenden Seiten ist das jeweilige eine Ende jeder Elektrodenbahn 17, 18 einer Polarität zu einer Sammelbahn 19, 20 zusammengefasst. Auf diese Weise bilden die Elektrodenbahnen 17, 18 mit ihren zugehörigen Sammelbahnen 19, 20 kammartige Strukturen, wobei die Strukturen beider Polaritäten gleichsam ineinander greifen. Die einzelnen, im wesentlichen geraden Elektrodenbahnen 17, 18 weisen gegenläufig wellenartige Unterstruktur auf, wodurch jeweils zwischen zwei nächst benachbarten Elektrodenbahnen 17, 18 eine Vielzahl von engen Stellen 21 gebildet sind. An jeder dieser Stellen 21 bildet sich im eingangs erwähnten gepulsten Betrieb gemäß der bereits zitierten US-A 5 604 410 innerhalb des Entladungsgefäßes eine Einzelentladung aus (nicht dargestellt). Dieses Elektrodenlayout ist insbesondere auch für die bereits erwähnte Flachlampenvariante mit wellenartiger Frontplatte gemäß der WO 03/017312 geeignet.

Da die Trägerfolie des verklebten Laminats 16 die Außenseite der Rückseite der Flachlampe 4 ist, d.h. gleichzeitig als elektrisch isolierende Schutzfolie dient, kann die Flachlampe 4 im Prinzip direkt auf der Rückwand 5 des Gehäuses 2 angeordnet werden, ohne dass die Gefahr eines elektrischen Kurzschlusses der Außenelektroden 17, 18 durch die metallische Rückwand 5 besteht oder die relativ hohen Spannungen an den Elektroden während des Pulsbetriebes elektrische Überschläge zwischen Elektroden und Rückwand 5 entstehen lassen. Die dadurch mögliche Nähe zwischen Flachlampe 4 und Rückwand 5 des Gehäuses 2 fördert im Betrieb die Wärmeabfuhr nach Außen, sowohl hinsichtlich der beim Betrieb im Innern der Flachlampe als auch in den Außenelektroden 17, 18 erzeugten Verlustwärme. Unterstützend kann es zudem hilfreich sein, die Außenseite der Rückwand 5 zu schwärzen, um dadurch den Emissionskoeffizienten zu erhöhen.

Außerdem ist auf dem Rahmen 3 noch eine Diffusorplatte 25 angeordnet, um die von der Flachlampe 4 auf ihrer Vorderseite erzeugte Leuchtdichte noch weiter zu homogenisieren. Der Homogenisierungsgrad und die Höhe der Leuchtdichte können durch den Abstandes zwischen Diffusorplatte 25 und der Vorderseite der Flachlampe 4 beeinflusst werden. Dazu wird beispielsweise der Rahmen 3 mehr oder weniger tief auf die Seitenwände 6 des Gehäuses 2 gesteckt. Außerdem müssen dann zumindest die schrägen Innenwände 10 des Rahmens 2 entsprechend angepasst werden.

## Patentansprüche

1. Beleuchtungssystem (1), insbesondere zur Hinterleuchtung von Flüssigkristallbildschirmen, mit
o einer Flachlampe (4), die eine für die Lichtabstrahlung vorgesehene Vorderseite und eine dazu entgegengesetzte Rückseite aufweist,
o einem flachen Gehäuse (2) mit einer planen Rückwand (5) sowie vier Seitenwänden (6), wobei die Flachlampe innerhalb des Gehäuses (2) auf der Rückwand (5) angeordnet ist,
o einem Rahmen (3), der einerseits die Seitenwände (6) des Gehäuses (2) zumindest teilweise umfasst und sich andererseits mindestens bis zum Rand der Flachlampe (4) erstreckt,
**dadurch gekennzeichnet, dass**
sich zwischen dem Rahmen (3) und dem Rand der Flachlampe (4) eine um die Flachlampe umlaufende elastische Leiste (12) erstreckt.

2. Beleuchtungssystem nach Anspruch 1, wobei der Rahmen (3) den Rand der Flachlampe (4) überdeckt.

3. Beleuchtungssystem nach Anspruch 1, wobei die umlaufende elastische Leiste (12) die Flachlampe (4) mittels Formschluss festhält.

4. Beleuchtungssystem nach einem der vorstehenden Ansprüche, wobei der Rahmen (3) eine an die Flachlampe (4) angrenzende umlaufende Fläche (11) aufweist, die als Reflektor, insbesondere für sichtbares Licht, ausgelegt ist.

5. Beleuchtungssystem nach Anspruch 4, wobei die Reflektorfläche (11) des Rahmens (3) zu der Vorderseite der Flachlampe (4) hin geneigt ist.

6. Beleuchtungssystem nach einem der vorstehenden Ansprüche, wobei zwischen der Rückseite der Flachlampe (4) und der Rückwand (5) des Gehäuses (2) eine dünne elastische, optional mehrteilige, Auflage (7) angeordnet ist.

7. Beleuchtungssystem nach Anspruch 6, wobei die dünne elastische Auflage als doppelseitige Klebestreifen (7) ausgebildet ist, mit denen die Flachlampe (4) auf die Rückwand (5) des Gehäuses (2) geklebt ist.

8. Beleuchtungssystem nach Anspruch 7, wobei die Klebestreifen (7) parallel zu einer oder den beiden Seitenkanten der Rückseite der Flachlampe (4) gleichverteilt angeordnet sind, so dass die Klebestreifen (7) die Rückseite der Flachlampe (4) in gedachte gleichgroße Flächen (8) aufteilen.

9. Beleuchtungssystem nach einem der vorstehenden Ansprüche, wobei die Flachlampe zum Betrieb mittels dielektrisch behinderter Entladung ausgelegt ist.

10. Beleuchtungssystem nach Anspruch 9, wobei auf der Rückseite der Flachlampe (4) linienartige Außenelektroden (17, 18) aufgebracht sind.

11. Beleuchtungssystem nach Anspruch 10, wobei die Rückseite der Flachlampe einschließlich der linienartigen Außenelektroden mit einer elektrisch isolierenden Schutzschicht bedeckt ist.

12. Beleuchtungssystem nach Anspruch 10, wobei die Außenelektroden (17, 18) in einem folienartigen Laminat (16) integriert sind.

13. Beleuchtungssystem nach einem der vorstehenden Ansprüche, wobei die Außenseite der Rückwand des Gehäuses geschwärzt ist.

14. Beleuchtungssystem nach einem der vorstehenden Ansprüche, wobei auf dem Rahmen (3) eine Diffusorplatte (25) angeordnet ist.

## Claims

1. Illumination system (1), in particular for backlighting liquid crystal displays, having
• a flat lamp (4), which has a front side, provided for emitting the light, and a rear side opposite said front side,
• a flat housing (2) having a planar rear wall (5) and four side walls (6), the flat lamp being arranged within the housing (2) on the rear wall (5), and
• a frame (3), which, on the one hand, at least partially surrounds the side walls (6) of the housing (2), and, on the other hand, extends at least up to the edge of the flat lamp (4),
**characterized in that** an elastic strip (12) which runs around the flat lamp extends between the frame (3) and the edge of the flat lamp (4).

2. Illumination system according to Claim 1, the frame (3) overlapping the edge of the flat lamp (4).

3. Illumination system according to Claim 1, the peripheral, elastic strip (12) fixing flat lamp (4) by means of an interlocking connection.

4. Illumination system according to one of the preceding claims, the frame (3) having a peripheral surface (11), which adjoins the flat lamp (4) and is designed as a reflector, in particular for visible light.

5. Illumination system according to Claim 4, the reflector surface (11) of the frame (3) being inclined towards the front side of the flat lamp (4).

6. Illumination system according to one of the preceding claims, a thin, elastic, optionally multi-part bearing (7) being arranged between the rear side of the flat lamp (4) and the rear wall (5) of the housing (2).

7. Illumination system according to Claim 6, the thin, elastic bearing being in the form of double-sided adhesive strips (7), by means of which the flat lamp (4) is adhesively bonded to the rear wall (5) of the housing (2).

8. Illumination system according to Claim 7, the adhesive strips (7) being arranged parallel to one or to both of the side edges of the rear side of the flat lamp (4) such that they are evenly distributed, with the result that the adhesive strips (7) divide the rear side of the flat lamp (4) into imaginary areas (8) of equal size.

9. Illumination system according to one of the preceding claims, the flat lamp being designed for operation by means of dielectrically impeded discharge.

10. Illumination system according to Claim 9, linear outer electrodes (17, 18) being fitted to the rear side of the flat lamp (4).

11. Illumination system according to Claim 10, the rear side of the flat lamp including the linear outer electrodes being covered by an electrically insulating protective layer.

12. Illumination system according to Claim 10, the outer electrodes (17, 18) being integrated in a foil-like laminate (16).

13. Illumination system according to one of the preceding claims, the outer side of the rear wall of the housing being blackened.

14. Illumination system according to one of the preceding claims, a diffuser plate (25) being arranged on the frame (3).

## Revendications

1. Système (1) d'éclairage, notamment d'éclairage par l'arrière d'écrans à cristal liquide, comprenant
∘ une lampe (4) plate, qui a une face avant prévue pour l'émission de lumière et une face arrière qui lui est opposée,
∘ un boîtier (2) plat ayant une paroi (5) arrière plane ainsi que quatre parois (6) latérales, la lampe plate étant disposée à l'intérieur du boîtier (2) sur la paroi (5) arrière,
∘ un cadre (3), qui enchâsse au moins en partie, d'une part, les parois (6) latérales du boîtier (2) et qui s'étend, d'autre part, au moins jusqu'au bord de la lampe (4) plate,
**caractérisé en ce que**
une baguette (12) élastique entourant la lampe plate s'étend entre le cadre (3) et le bord de la lampe (4) plate.

2. Système d'éclairage suivant la revendication 1, dans lequel le cadre (3) recouvre le bord de la lampe (4) plate.

3. Système d'éclairage suivant la revendication 1, dans lequel la baguette (12) élastique qui fait le tour maintient la lampe (4) plate au moyen d'une complémentarité de forme.

4. Système d'éclairage suivant l'une des revendications précédentes, dans lequel le cadre (3) a une surface (11) qui fait le tour, qui est voisine de la lampe (4) plate et qui est conçue comme réflecteur, notamment pour de la lumière visible.

5. Système d'éclairage suivant la revendication 4, dans lequel la surface (11) du cadre (3), qui forme réflecteur, est inclinée vers la face avant de la lampe (4) plate.

6. Système d'éclairage suivant l'une des revendications précédentes, dans lequel un support (7) mince et élastique, le cas échéant en plusieurs parties, est interposé entre la face arrière de la lampe (4) plate et la paroi (5) arrière du boîtier (2).

7. Système d'éclairage suivant la revendication 6, dans lequel le support mince élastique est constitué sous la forme de rubans (7) adhésifs double face par lesquels la lampe (4) plate est collée à la paroi (5) arrière du boîtier (2).

8. Système d'éclairage suivant la revendication 7, dans lequel les rubans (7) adhésifs sont répartis uniformément en étant parallèles à l'un ou aux deux bords latéraux de la face arrière de la lampe (4) plate, de sorte que les rubans (7) adhésifs subdivisent la face arrière de la lampe (4) plate en des surfaces (8) imaginaires de même dimension.

9. Système d'éclairage suivant l'une des revendications précédentes, dans lequel la lampe plate est conçue pour fonctionner au moyen d'une décharge rendue incomplète par voie diélectrique.

10. Système d'éclairage suivant la revendication 9, dans lequel des électrodes (17, 18) extérieures linéaires sont déposées sur la face arrière de la lampe (4) plate.

11. Système d'éclairage suivant la revendication 10, dans lequel la face arrière de la lampe plate, y compris les électrodes extérieures linéaires, est recouverte d'une couche de protection isolante du point de vue électrique.

12. Système d'éclairage suivant la revendication 10, dans lequel les électrodes (17, 18) extérieures sont intégrées dans un stratifié (16) de type en feuille.

13. Système d'éclairage suivant l'une des revendications précédentes, dans lequel la face extérieure de la paroi arrière du boîtier est noircie.

14. Système d'éclairage suivant l'une des revendications précédentes, dans lequel une plaque (25) formant diffuseur est diffusée sur le cadre (3).
